# EUROPÄISCHE PATENTSCHRIFT

(11) **EP 1 049 559 B1**
(45) Veröffentlichungstag und Bekanntmachung des Hinweises auf die Patenterteilung: **26.11.2003**
(21) Anmeldenummer: 99904774.9
(22) Anmeldetag: 14.01.1999
(51) Int. Cl.: B23K 26/04, B23K 26/06

(54) **WERKSTÜCKBESTRAHLUNGSANLAGE**
WORK PIECE IRRADIATION SYSTEM
DISPOSITIF D'IRRADIATION DE PIECES

(30) Priorität: 16.01.1998 DE 19801364
(43) Veröffentlichungstag der Anmeldung: 08.11.2000
(73) Patentinhaber: CARL ZEISS, 89518 Heidenheim (Brenz) (DE); CARL ZEISS-STIFTUNG HANDELND ALS CARL ZEISS, D-89518 Heidenheim (Brenz) (DE)
(72) Erfinder: SCHWEIZER, Jürgen, D-73463 Westhausen (DE)
(86) Internationale Anmeldenummer: EP9900173
(87) Internationale Veröffentlichungsnummer: WO99036220

(56) Entgegenhaltungen:
- DE-A- 19 513 354
- DE-A- 19 707 834
- US-A- 4 724 298
- US-A- 5 618 454

## Beschreibung

Die Erfindung betrifft eine Werkstückbestrahlungsanlage gemäß dem Oberbegriff des Anspruchs 1.

Eine derartige Werkstückbestrahlungsanlage ist insbesondere aus der DE 195 13 354, DE 195 34 165 und der DE 197 07 834 bekannt.

Die Vermessung zur Kalibrierung eines Segmentspiegelfeldes geschieht heute mittels (Laser-)Strahlen, mit welchen auch die Materialbearbeitung durchgeführt wird - gegebenenfalls wird die Intensität der Strahlen an geeigneter Stelle abgeschwächt, um das Meßelemente, hier eine CCD-Kamera nicht zu zerstören. Diese Methode hat Vorteile wie
- es ist kein zusätzlicher Laser erforderlich und
- es treten keine maßgeblichen Verfälschungen des Strahlengangs auf, da das zum Messen verwendete Licht die gleiche Wellenlänge wie das Licht der Bearbeitungsstrahlenbündel hat und somit fehlerfrei durch die gleichen optischen Komponenten geführt werden kann. (Hätte der messende Strahlengang eine andere Wellenlänge, würde er durch die gegebene Optik anders gebrochen und würde letztendlich nicht mehr auf der CCD-Kamera abgebildet.)

Diese Methode ist so lange anwendbar, wie die Wellenlänge des bearbeitenden Laserlichts von der CCD-Kamera problemlos verarbeitet werden kann. Somit ist sie wegen den benötigten großflächigen CCD-Arrays also
- technisch einfach und preiswert im Wellenlängenbereich von 400 bis 1.000 nm,
- technisch aufwendiger und teurer im Wellenlängenbereich von 200 bis 400 nm,
- technisch sehr aufwendig und sehr teuer im Wellenlängenbereich von 1.000 bis 5.000 nm, und
- technisch extrem aufwendig und extrem teuer im Wellenlängenbereich von 5.000 bis 20.000 nm.

Die derzeit für die Materialbearbeitung in der Leiterplattenindustrie üblichen Wellenlängen sind 248 nm (Excimer Laser), 355 nm (frequenzverdreifachter Yag-Laser) und 9.600 nm (CO₂-Laser). Das bekannte Prinzip liegt damit für die beiden UV-Wellenlängen gerade noch am Rande der wirtschaftlichen Machbarkeit. Für den CO₂-Laser sind aus technischen und wirtschaftlichen Gründen keine in einem Serien-Produktionsgerät realisierbaren Lösungen möglich.

Es ist die Aufgabe der Erfindung eine Werkstückbestrahlungsanlage zu schaffen, bei welcher die Stellung der Kippvorrichtungen, insbesondere in einem Segmentspiegelfeld, unabhängig von der Wellenlänge der für die Werkstückbestrahlungsanlage verwendeten Lichtbündel bestimmt werden können.

Diese Aufgabe wird erfindungsgemäß durch die Merkmale des Anspruchs 1 gelöst. Vorteilhafte Ausgestaltungen der Erfindung ergeben sich aus den Merkmalen der abhängigen Ansprüche.

Die erfindungsgemäße Werkstückbestrahlungsanlage besitzt mehrere individuell verstellbare Ablenkvorrichtungen und es werden mehrere räumlich voneinander getrennte, individuelle Bearbeitungsstrahlenbündel durch die im optischen Strahlengang der Bearbeitungsstrahlenbündel angeordneten Ablenkvorrichtungen jeweils separat auf mindestens ein zu bestrahlendes Werkstück an veränderbare Punkte oder Flächen auf dem Werkstück gelenkt.

Die Anlage zeichnet sich dadurch aus, daß eine zusätzliche Strahlenquelle zur Erzeugung mindestens eines Meßstrahlenbündels in der Werkstückbestrahlungsanlage so angeordnet ist, daß das von der zusätzlichen Strahlenquelle ausgehende Meßstrahlenbündel gleichzeitig auf mehrere Ablenkvorrichtungen auffällt und daß eine für die Wellenlänge des Meßstrahlenbündels empfindliche Meßaufnahmeeinrichtung in der Werkstückbestrahlungsanlage so angeordnet ist, daß sie zumindest einen Teil der von den bestrahlten Ablenkvorrichtungen abgelenkten Meßstrahlenbündel zur Detektion der Ablenkwirkung der Ablenkvorrichtungen aufnimmt.

Vorzugsweise ist in einer ersten Variante der Erfindung vor den Ablenkvorrichtungen im optischen Strahlengang der Bearbeitungsstrahlenbündel ein erster optischer Körper angebracht, welcher die Bearbeitungsstrahlenbündel auf die Ablenkvorrichtungen auffallen läßt und die Meßstrahlenbündel in den optischen Strahlengang der Bearbeitungsstrahlenbündel in Richtung auf die Ablenkvorrichtungen einkoppelt, und nach den Ablenkvorrichtungen ein zweiter optischer Körper angebracht, welcher die Bearbeitungsstrahlenbündel auf Punkte oder Flächen auf dem Werkstück auffallen läßt und zumindest die Meßstrahlenbündel aus dem optischen Strahlengang der Bearbeitungsstrahlenbündel in Richtung auf die Meßaufnahmeeinrichtung auskoppelt. Die optischen Körper können insbesondere dichroitische Spiegel oder dichroitische Strahlteilerwürfel sein.

Vorzugsweise ist dabei zumindest einer der beiden optischen Körper aus dem optischen Strahlengang der Bearbeitungsstrahlenbündel entfernbar.

Vorzugsweise sind in einer weiteren Variante der Erfindung die Meßstrahlenbündel unter einem anderen Winkel als die Bearbeitungsstrahlenbündel auf die Ablenkvorrichtungen auffallend, so daß die Strahlenquelle zur Erzeugung des Meßstrahlenbündels und die Meßaufnahmeeinrichtung seitlich des optischen Strahlengangs der Bearbeitungsstrahlenbündel angeordnet sein kann.

Zumindest an die Aufnahmeeinrichtung sollte eine Auswerteeinrichtung angeschlossen sein, welche einen gespeicherten bzw. vorgegebenen SOLL-Zustand mit dem von der Auswerteeinrichtung gemessenen IST-Zustand vergleicht.

Es ist aus Kostengründen vorteilhaft, daß die Wellenlänge der Meßstrahlenbündel im sichtbaren Wellenlängenbereich liegt, insbesondere wenn die Wellenlänge der Bearbeitungsstrahlenbündel im infraroten bzw. ultravioletten Wellenlängenbereich liegt.

Eine einfache Realisierung der Erfindung erhält man, wenn jede Ablenkvorrichtung aus einem Kippspiegel besteht.

Vorzugsweise sind die Ablenkvorrichtungen motorisch verstellbar.

Die Ablenkvorrichtungen können als Kippvorrichtungen mit jeweils einem Kippkörper realisiert werden. Sind diese verspiegelt, so spricht man auch von Kippspiegel, wobei die Kippung meist in einer oder zwei Achsen erfolgt. Die Ablenkvorrichtungen sollten jeweils voneinander separat ausgeführt sein, um eine sichere Strahlführung für jedes Bearbeitungsstrahlenbündel unabhängig von den anderen Bearbeitungsstrahlenbündeln sicher zu stellen. Dies bedeutet nichts anderes, als daß jedes individuelle Bearbeitungsstrahlenbündel durch jeweils einen nur dem jeweiligen individuellen Bearbeitungsstrahlenbündel zugeordneten Kippspiegel als Ablenkungsvorrichtung ablenkbar ist, wobei die Ablenkung vorzugsweise einer Reflexion entspricht.

Das Meßstrahlenbündel muß nicht auf die gesamte Oberfläche der Ablenkungseinrichtung fallen, sondern kann auch nur auf einen Teil (vorzugsweise reflektierenden Teil) auffallen.

Die Ablenkungseinrichtung kann eine Kippvorrichtung mit einem Kippkörper sein, dessen Vorderseite vorzugsweise zumindest teilweise verspiegelt ist; der Meßstrahl fällt dann für die Messung auf diese verspiegelte Oberfläche.

Ist zwischen den Ablenkungsvorrichtungen und der Werkstückoberfläche ein Projektions-Objektiv, vorzugsweise ein F-TETA-Objektiv, zur Fokussierung der Werkstückbestrahlungsbündel angeordnet, so werden die Werkstückbestrahlungsbündel sehr genau auf die Werkstückoberfläche fokussiert und bei der Verwendung des F-TETA-Objektivs erfolgt die Bestrahlung auf dem Werkstück immer nahezu parallel zur optischen Achse des Projektions-Objektivs.

Vor der Meßaufnahmeeinrichtung sollte ein Beobachtungs-Objektiv angeordnet sein, welches die benötigte Messung in der benötigten Genauigkeit möglichst schnell realisieren hilft.

Wenn die Oberfläche der Spiegelanordnung als erster und/oder zweiter optischer Körper ungeteilt ist, dann läßt sie sich mit einer höheren Positioniergenauigkeit bewegen.

Um Positionierfehler zu minimieren, sollte der die erste. Spiegelanordnung bildende erste optische Körper teildurchlässig sein und zwar reflektierend für die Wellenlänge der Werkstückbestrahlungsbündeln und transparent für die Wellenlänge der Meßstrahlenbündel.

Vorzugsweise ist nach den als Ablenkvorrichtungen dienenden Kippvorrichtungen ein eine zweite Spiegelanordnung bildender zweiter optischer Körper angebracht, welcher die Meßstrahlen auf die Meßaufnahmeeinrichtung lenkt. Diese zweite Spiegelanordnung ist vorzugsweise aus dem Strahlengang der Werkstückbestrahlungsbündel entfernbar, z.B. ausschwenkbar. Auch hier ist es hinsichtlich der Positioniergenauigkeit vorteilhaft, wenn die zweite Spiegelanordnung teildurchlässig ist und zwar reflektierend für die Wellenlänge der Meßstrahlenbündel und transparent für die Wellenlänge der Werkstückbestrahlungsbündel.

Es ist vorteilhaft, wenn die Werkstückbestrahlungsbündel aus einem Linsenarray räumlich separat getrennt austretend sind. Einen relativ einfachen Aufbau erhält man, wenn dem Linsenarray eine für alle Werkstückbestrahlungsbündel gemeinsame Fokussierlinse nachgeordnet ist.

Vor der ersten Spiegelanordnung sollten alle Strahlen durch einen gemeinsamen Fokus verlaufen.

Vorzugsweise durchlaufen vor dem F-TETA-Objektiv die Strahlmittelachsen der Werkstückbestrahlungsbündel in Grundstellung eine gemeinsame Pupille.

Es können auch mehrere Aufnahmeeinrichtungen in der Anlage für unterschiedliche Spiegel des Spiegelarrays angeordnet sein.

Die Erfindung wird im folgenden anhand eines Ausführungsbeispiels unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in
- Figur 1: eine Prinzipskizze der Strahlengänge für eine erste und eine zweite Variante der Erfindung; und
- Figur 2: eine Prinzipskizze der Strahlengänge für eine dritte Variante der Erfindung.

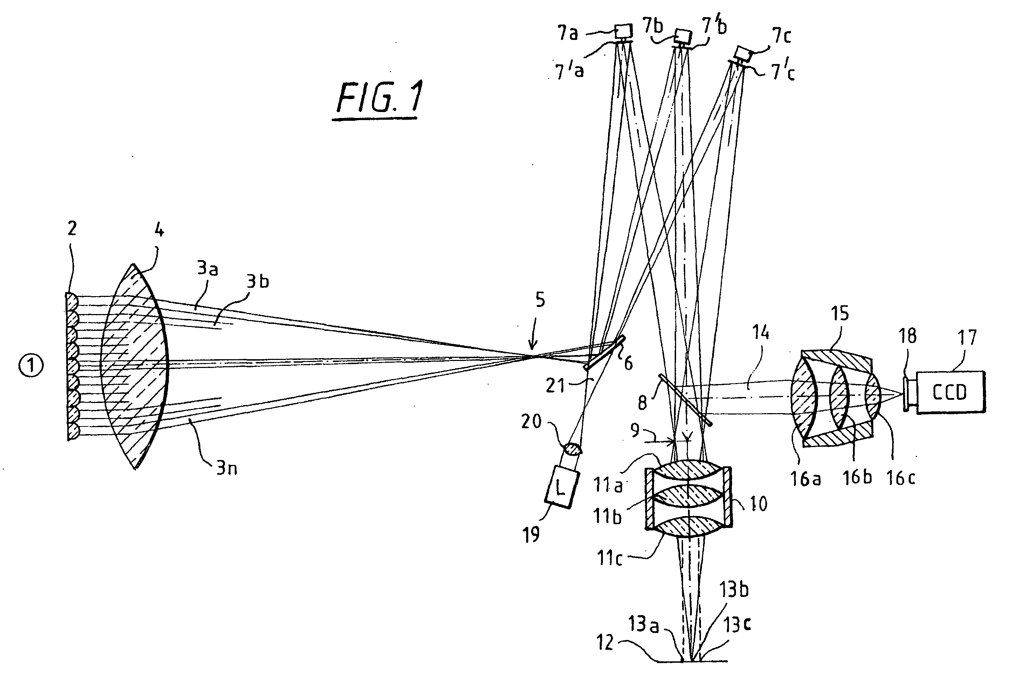

Mit der in der Figur 1 dargestellten Anordnung können zwei verschiedene Varianten der Erfindung erläutert werden.

Bei beiden Varianten erzeugt ein Bearbeitungslaser als Hauptlaser einen Laserstrahl (1), welcher durch eine dem Bearbeitungslaser nachgeordnete optische Anordnung (gemäß den gewünschten Vorgaben) gestaltet wird. Dieser Teil gemäß dem bekannten Stand der Technik ist in der Figur nicht dargestellt.

Dieser Laserstrahl (1) trifft dann auf eine optische Anordnung (2) (z.B. ein Linsenarray), welches den Laserstrahl (1) in viele diskrete, voneinander räumlich getrennte, zueinander parallel verlaufende Multi-Strahlenbündel (3a, 3b, ..., 3n) zerlegt. Alle Multi-Strahlenbündel (3a, 3b, ..., 3n) fallen dann auf eine weitere optische Anordnung (4) (in diesem Fall eine entsprechend große Linse mit brechender Wirkung), welche alle Multi-Strahlenbündel (3a, 3b, ..., 3n) in einen Punkt (5) fokussiert. Nachdem die Multi-Strahlenbündel (3a, 3b, ..., 3n) den Fokuspunkt (5) passiert haben, fallen sie auf einen Segmentspiegel (7a, 7b, 7c), wobei jedem einzelnen Strahlenbündel des Multi-Strahlenbündels (3a, 3b, ..., 3n) ein eigener Spiegel (7'a, 7'b, 7'c) des Segmentspiegels (7a, 7b, 7c) zugeordnet ist. Die Zahl der Spiegel (7'a, 7'b, 7'c) entspricht dazu der Anzahl der Multi-Strahlenbündel, auch wenn in den Figuren aus Übersichtlichkeitsgründen nur drei Spiegel dargestellt sind.

Der Segmentspiegel (7a, 7b, 7c) lenkt die Multi-Strahlenbündel (3a, 3b, ..., 3n) in Grundstellung durch eine für die einzelnen Multi-Strahlenbündel (3a, 3b, ..., 3n) gemeinsame Pupille (9) in ein Projektions-Objektiv (10), welches vorzugsweise aus mehreren Linsen (11a, 11b, 11c) aufgebaut ist. Dieses Projektions-Objektiv (10) sorgt dafür, daß die Multi-Strahlenbündel (3a, 3b, ..., 3n) senkrecht auf die Werkstückoberfläche (12) auffallen und dort ihren jeweiligen Fokus (13a, 13b, 13c) haben.

Zwischen der optischen Anordnung (4) und dem Segmentspiegel (7a, 7b, 7c) ist ein erster Ablenkspiegel (6) angeordnet, welcher für eine Umlenkung der Multi-Strahlenbündel (3a, 3b, ..., 3n) auf den Segmentspiegel (7a, 7b, 7c) sorgt. Ein weiterer Ablenkspiegel (8) ist zwischen dem Segmentspiegel (7a, 7b, 7c) und dem Projektions-Objektiv (10) angeordnet.

Ein zweiter Laser (19) ist auf der Seite der rückwärtigen Verlängerung der am ersten Spiegel (6) umgelenkten Multi-Strahlenbündel angeordnet. Dieser erzeugt einen Meßlaserstrahl (21), welcher durch eine entsprechende optische Anordnung (20) in seinem Öffnungswinkel so gestaltet ist, daß er die umgelenkten Multi-Strahlenbündel (3a, 3b, ..., 3n) möglichst exakt einhüllt. Das Licht des Meßlaserstrahls (21) fällt somit auf die einzelnen Spiegel (7'a, 7'b, 7'c) des Segmentspiegels (7a, 7b, 7c) exakt im gleichen Winkel wie die Multi-Strahlenbündel (3a, 3b, ..., 3n).

In einer ersten Variante der Erfindung sind die beiden Ablenkspiegel (6, 8) dichroitisch derart beschichtet, daß der erste Ablenkspiegel (6) eine hohe Reflektivität für die auf ihn fallenden Multi-Strahlenbündel (3a, 3b, ..., 3n) aus dem Laserstrahl (1) des Bearbeitungslasers hat und eine möglichst hohe Transmission für den Meßlaserstrahl (21) aus dem zweiten Laser (19), wobei der Meßlaser (19) im sichtbaren Spektralbereich seinen Laserstrahl (21) aussendet. Dieser Meßlaserstrahl (21) fällt dann zusammen mit den Multi-Strahlenbündel (3a, 3b, ..., 3n) des Bearbeitungslasers auf den Segmentspiegel (7a, 7b, 7c) und wird mit diesen in Richtung auf das Projektions-Objektiv (10) reflektiert.

Demhingegen hat der zweite Ablenkspiegel (8) eine derartige dichroitische Beschichtung, daß er eine hohe Reflektivität für den auf ihn fallenden Laserstrahl (21) des Meßlasers (19) besitzt und eine möglichst hohe Transmission für die Multi-Strahlenbündel (3a, 3b, ..., 3n) des Bearbeitungslasers. Durch den zweiten Ablenkspiegel (8) werden die durch den Segmentspiegel (7a, 7b, 7c) erzeugten Strahlenbündel (14) des Meßlaserstrahls (21) auf ein Beobachtungsobjektiv (15) abgelenkt, welches die Strahlenbündel (14) in das Objektiv (18) einer CCD-Kamera (17) abbildet und welches selber vorzugsweise aus mehreren Linsen (16a, 16b, 16c) aufgebaut ist.

In einer zweiten Variante der Erfindung sind die beiden Ablenkspiegel (6, 8) aus dem Strahlengang entfernbar, z.B. ausschwenkbar oder ausschiebbar. Erfolgt eine Bearbeitung, so ist der erste Ablenkspiegel (6) eingeschwenkt und der zweite Ablenkspiegel (8) ausgeschwenkt. Erfolgt hingegen eine Messung, so ist der erste Ablenkspiegel (6) ausgeschwenkt und der zweite Ablenkspiegel (8) eingeschwenkt. Die Reflektivität der Spiegel (6, 8) kann für die auf ihn fallenden Multi-Strahlenbündel (3a, 3b, ..., 3n) des Bearbeitungslasers bzw. des Meßlaserstrahls (21) des Meßlasers (19) jeweils optimiert sein. Der Meßlaserstrahl (21) fällt bei der Messung stets unter demselben Winkel wie die Bearbeitungslaserstrahlen (3a, 3b, ..., 3n) auf den Segmentspiegel (7a, 7b, 7c) und wird wie diese in Richtung auf das Projektions-Objektiv (10) unter demselben Winkel reflektiert. Durch den zweiten Ablenkspiegel (8) werden die durch den Segmentspiegel (7a, 7b, 7c) erzeugten Strahlenbündel (14) des Meßlaserstrahls (21) auch hier auf das Beobachtungsobjektiv (15) abgelenkt, welches die Strahlenbündel (14) in das Objektiv (18) einer CCD-Kamera (17) abbildet.

Der Vorteil des ersten und zweiten Verfahrens ist darin zu sehen, daß die Meßstrahlen (14) von den Spiegeln (7'a, 7'b, 7'c) des Segmentspiegels (7a, 7b, 7c) unter demselben Winkel abgelenkt werden. Das erste Verfahren hat zudem den Vorteil, daß die Messung gleichzeitig mit der Bearbeitung oder zumindest kurz nach oder vor der Bearbeitung erfolgen kann. Falls die Restreflektivität des zweiten Ablenkspiegels (8) bei gegebener Empfindlichkeit der CCD-Kamera (17) für die Wellenlänge des Bearbeitungslasers zu einem störenden Signaluntergrund führen sollte, kann das Restlicht des Bearbeitungslasers über geeignete Filter eliminiert werden.

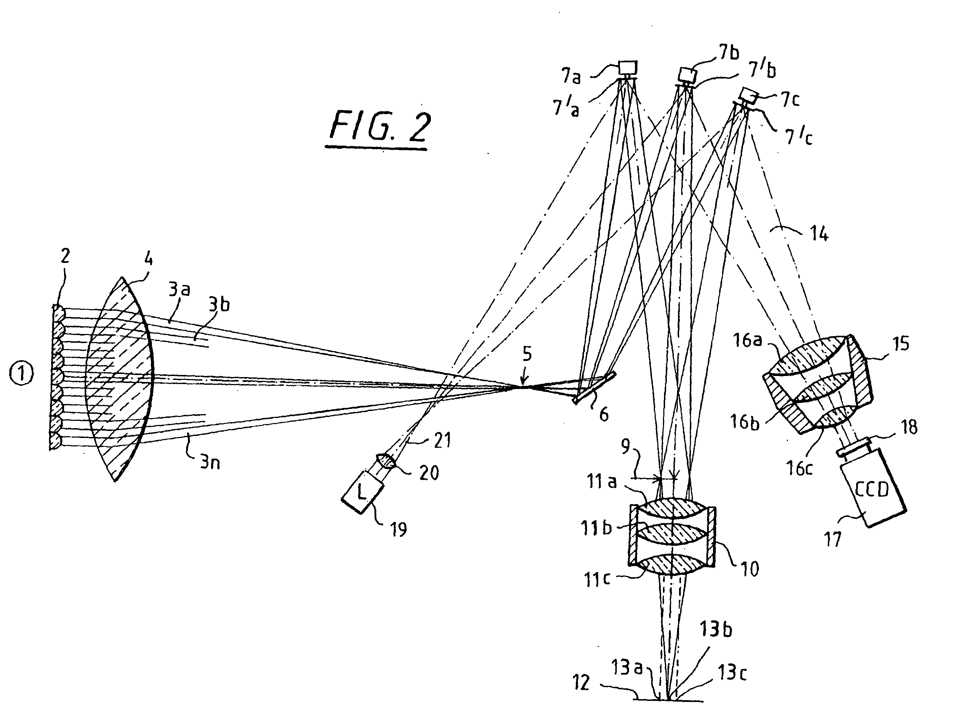

In Figur 2 ist nun eine dritte Variante der erfinderischen Lösung dargestellt. Diese Variante unterscheidet sich von den beiden vorabbeschriebenen Varianten im wesentlichen nur dadurch, daß der Meßlaserstrahl (21) (welcher wie bei den beiden zu der Figur 1 beschriebenen Varianten geformt ist) unter einem anderen Winkel als die Multi-Strahlenbündel (3a, 3b, ..., 3n) des Bearbeitungslasers auf den Segmentspiegel (7a, 7b, 7c) fällt und deshalb für den Meßlaserstrahl (21, 14) keine zusätzlichen Ablenkspiegel benötigt werden. Der apparative Aufbau für die Ablenkung der Multi-Strahlenbündel (3a, 3b, ..., 3n) des Bearbeitungslasers inklusive des ersten Planspiegels (6) (welcher bei einer anderen Konstruktion auch entfallen könnte) ist der gleiche wie in der Figur 1 dargestellt, da der Strahlengang der Multi-Strahlenbündel (3a, 3b, ..., 3n) des Bearbeitungslasers in derselben Art und Weise auch hier gegeben ist. Der zweite Planspiegel (8 in Figur 1) kann hier aber gänzlich entfallen, da er nur zur Auskopplung der Meßstrahlen (14) aus dem Strahlengang der Multi-Strahlenbündel (3a, 3b, ..., 3n) dient.

Da aber der Einfallswinkel mit dem Ausfallswinkel bei einem Spiegel immer identisch ist, kann aus der Beobachtung der Strahlenbündel (14) des Meßlasers (19) rein rechnerisch (mittels eines in der Figur nicht dargestellten Rechners) direkt auf die Stellung der Spiegel (7'a, 7'b, 7'c) im Spiegelsegment (7a, 7b, 7c) geschlossen werden oder eine Korrekturoptik (z.B. in Form eines Prismas, in der Figur nicht dargestellt) kann die Strahlengänge der einzelnen Meßstrahlenbündel (14) entsprechend korrigieren. Dabei treten nur leichte Verzerrungen durch die unterschiedlichen Winkel der Strahlenbündel (14, 3a, 3b, ..., 3n) am Segmentspiegel (7a, 7b, 7c) auf, da die Winkeldifferenz zwischen dem Meßstrahlenbündel (14) und den Multi-Strahlenbündeln (3a, 3b, ..., 3n) sehr klein ist. Um dies sicherzustellen sollte das Licht des Meßlasers (19) möglichst nahe am ersten Planspiegel (6) vorbei geführt werden.

Bei dem nun mit seiner optischen Achse in Richtung des Segmentspiegels (7a, 7b, 7c) orientierten Beobachtungs-Objektiv (15) kann es sich um ein zylindrisches, anamorphotisches Galilei-Teleskopobjektiv handeln, welches insbesondere auch die elliptischen Verzerrungen korrigieren kann, wenn die elliptischen Verzerrungen nicht bereits anderweitig, z.B. durch ein Prisma, korrigiert sind.

Der Rechner zur Verstellung der Spiegel (7'a, 7'b, 7'c) im Segmentspiegel (7a, 7b, 7c) sowie die benötigten Verstelleinrichtungen nach dem Stand der Technik für die einzelnen Spiegel (7'a, 7'b, 7'c) des Segmentspiegels (7a, 7b, 7c) sind, da aus dem Stand der Technik bekannt, nicht in den Figuren dargestellt.

Letztendlich basiert die erfinderische Lösung auf der Verwendung eines zusätzlichen Lasers (19) für Meßzwecke im sichtbaren Bereich, z.B. eines He-Ne Lasers, als Meßlaser (19) und einem Standard CCD-Chip bzw. Kamera (17), die für diese Wellenlänge selbst großflächig inzwischen ohne technische Probleme verfügbar und relativ preiswert ist.

Da sichtbares Licht insbesondere bei Durchgang durch Infrarot-Optik ganz anders gebrochen wird als infrarote Strahlung, muß vermieden werden, daß das sichtbare Meßlicht und die infrarote oder ultraviolette Strahlung des Bearbeitungslasers durch die gleiche brechende Optik gehen. Die vorherigen Erörterungen beschrieben eine rein auf Reflexion basierende Ausmessung des Segmentspiegels (7a, 7b, 7c).

Alternativ kann für die beschriebenen Varianten 1 oder 2 ein nur IR- oder UV-transmissiver Spiegel (8) (an der Meßanordnung), welcher sichtbares Licht reflektiert, verwendet werden, wenn die Messung nicht gleichzeitig mit der Bearbeitung geschehen muß. Der Hauptlaser wird dann für den Meßvorgang ausgeschaltet und aus der optischen Achse entfernt (z.B. Ausgeschwenkt) und der Meßlaser auf der optischen Achse des Hauptlasers für den Meßvorgang eingeschaltet. Der Meßlaser (19) braucht dabei kein Multi-Strahlenbündel zu erzeugen. Wichtig ist nur, daß er den Segmentspiegel (7a, 7b, 7c) mit seinen einzelnen Kippspiegeln (7'a, 7'b, 7'c) unter dem richtigen Winkel vollständig ausleuchten. Zum einen erzeugt die Begrenzung der Einzelspiegel (7'a, 7'b, 7'c) die gewünschten Multi-Meßstrahlenbündel (14) durch die Reflexion und zum andern ist die Energiedichte des Meßlasers (19) gering genug um in den Zwischenräumen zwischen den Kippspiegeln (7'a, 7'b, 7'c) des Segmentspiegels (7a, 7b, 7c) keine Schäden zu verursachen.

Die Beschichtung der Planspiegel (6, 8) sollte derart sein, daß sie optimal die Multi-Strahlenbündel (3a, 3b, ..., 3n) des Bearbeitungslasers reflektieren bzw. durchlassen und noch genügend stark das Licht (21) des Meßlaser (19) durchlassen bzw. reflektieren. Dies geschieht mit aus dem Stand der Technik bekannten Maßnahmen, vorzugsweise durch eine entsprechende Beschichtung, wie sie in der Optik sehr häufig hergestellt wird.

Das Auskoppeln der Meßstrahlenbündel (14) des Meß-Lasers (19) gemäß den ersten beiden Meßverfahren geschieht bevorzugt vor dem ersten refraktiven Element nach dem Segmentspiegel (7a, 7b, 7c) mit einem sogenannten zweiten Filterspiegel (8). Vorteilhafterweise ist dieser zweite Filterspiegel (8) derart, daß er IR- oder UV-Strahlung transmittiert und z.B. He-Ne-Strahlung reflektiert - was z.B. durch entsprechend beschichtetes Germanium gelingt. Dann kann dieser zweite Filterspiegel (8) stationär eingebaut werden.

Alternativ kann ein nur He-Ne-reflektierender Spiegel (8) verwendet werden, wenn die Messung nicht gleichzeitig mit der Bearbeitung geschehen muß. Der zweite Filterspiegel (8) wird dann simultan mit dem ersten Filterspiegel (6) ein- bzw. ausgefahren.

Das Beobachtungsobjektiv (15) ist vorteilhafterweise so ausgelegt, daß es auf dem Chip der CCD-Kamera (17) das gleiche Bildmuster erzeugt wie das Projektions-Objektiv (10) in der Bearbeitungsebene (12). Somit können dann mittels eines einfachen He-Ne-Meßlaser (19) und einer Standard-CCD-Kamera (17) stets die vom Segmentspiegel (7a, 7b, 7c) erzeugten Bildmuster und somit die einzelnen Kippspiegel (7'a, 7'b, 7'c) bezüglich der Lage ihrer jeweiligen Spiegelfläche unabhängig von der Wellenlänge des Bearbeitungslasers vermessen und justiert bzw. kalibriert werden.

Der Meßlaser (19) kann auch vor dem letzten refraktiven Element vor dem Segmentspiegel (7a, 7b, 7c) eingekoppelt und nach dem ersten refraktiven Element hinter dem Segmentspiegel ausgekoppelt werden, wenn die Vorsatzoptik bzw. das Beobachtungsobjektiv (15) so gestaltet sind, daß sie dann die von den Multi-Strahlenbündel (3a, 3b, ..., 3n) des Bearbeitungslasers abweichende Fokussierung der Meßstrahlen des Meßlasers (19) kompensieren.

Der Kippwinkel der Filterspiegel (6, 8) im Strahlengang kann vom Prinzipbild deutlich abweichen und kann so gewählt werden, wie es die Ausgestaltung des Gerätes, in welchem die Anordnung eingebaut ist, verlangt. Dadurch bedingte, insbesondere elliptische Verzeichnungen können mit den bekannten mathematischen Rechenprogrammen oder durch eine entsprechende optische Korrekturoptik (nach dem Stand der Technik, deshalb in den Figuren nicht dargestellt) leicht korrigiert werden.

Bei der Lösung mit zwei Schwenkspiegeln (6, 8) kann man entweder nur messen oder bearbeiten, wobei entweder der Bearbeitungslaser oder der Meßlaser (19) eingeschaltet wird. Bei der Bearbeitung ist der erste Spiegel (6). eingeschwenkt und der zweite Spiegel (8) ausgeschwenkt. Oder es erfolgt eine Vermessung des Segmentspiegels (7a, 7b, 7c), sodaß der erste Spiegel (6) ausgeschwenkt und der zweite Spiegel (8) eingeschwenkt ist. Solange eine Bewegung eines der beiden Spiegel (6, 8) erfolgen muß, hat man eine gewisse Meßunsicherheit. Diese Meßunsicherheit ist bei der ersten Variante mit dichroitischen Spiegeln vermieden.

Bei der dritten Alternative fällt das Meßlicht unter anderem Winkel auf die Kippspiegel des Segmentspiegels (7a, 7b, 7c), sodaß die Messung und die Bearbeitung gleichzeitig erfolgen kann und keinerlei Bewegung zwischen der Bearbeitung und der Vermessung erfolgen muß, was die Meßsicherheit vergrößert.

## Patentansprüche

1. Werkstückbestrahlungsanlage, welche mehrere individuell verstellbare Ablenkvorrichtungen (7a, 7b, 7c) besitzt und bei welcher mehrere räumlich voneinander getrennte individuelle Bearbeitungsstrahlenbündel (3a, 3b, 3n) im infraroten oder ultravioletten Wellenlängenbereich durch die im optischen Strahlengang der Bearbeitungsstrahlenbündel angeordneten Ablenkvorrichtungen (7a, 7b, 7c) jeweils separat auf mindestens ein zu bestrahlendes Werkstück (12) an veränderbare Punkte (13a, 13b, 13c) oder Flächen auf dem Werkstück (12) gelenkt werden, und wobei eine zusätzliche Strahlenquelle (19) zur Erzeugung mindestens eines Meßstrahlenbündels (21) in der Werkstückbestrahlungsanlage so angeordnet ist, daß das von der zusätzlichen Strahlenquelle (19) ausgehende Meßstrahlenbündel gleichzeitig auf mehrere Ablenkvorrichtungen (7a, 7b, 7c) auffällt und eine Meßaufnahmeeinrichtung (15, 17, 18) in der Werkstückbestrahlungsanlage so angeordnet ist, daß sie zumindest einen Teil der von den bestrahlten Ablenkvorrichtungen (7a, 7b, 7c) abgelenkten Meßstrahlenbündel (21) zur Detektion der Ablenkwirkung der Ablenkvorrichtungen (7a, 7b, 7c) aufnimmt, **dadurch gekennzeichnet, daß** die Wellenlänge des mindestens einen Meßstrahlenbündels im sichtbaren Wellenlängenbereich liegt und die Meßaufnahmeeinrichtung (15, 17, 18) für Licht im sichtbaren Wellenlängenbereich empfindlich ist.

2. Werkstückbestrahlungsanlage nach Anspruch 1, **dadurch gekennzeichnet, daß** vor den Ablenkvorrichtungen (7a, 7b, 7c) im optischen Strahlengang der Bearbeitungsstrahlenbündel ein erster optischer Körper (6) angebracht ist, welcher die Bearbeitungsstrahlenbündel (3a, 3b, 3n) auf die Ablenkvorrichtungen (7a, 7b, 7c) auff allen läßt und das/die Meßstrahlenbündel (21) in den optischen Strahlengang der Bearbeitungsstrahlenbündel in Richtung auf die Ablenkvorrichtungen (7a, 7b, 7c) einkoppelt, und daß nach den Ablenkvorrichtungen (7a, 7b, 7c) ein zweiter optischer Körper (8) angebracht ist, welcher die Bearbeitungsstrahlenbündel auf Punkte oder Flächen auf dem Werkstück (12) auffallen läßt und zumindest das/die Meßstrahlenbündel (21) aus dem optischen Strahlengang der Bearbeitungsstrahlenbündel in Richtung auf die Meßaufnahmeeinrichtung (15, 17, 18) auskoppelt.

3. Werkstückbestrahlungsanlage nach Anspruch 2, **dadurch gekennzeichnet, daß** zumindest einer der beiden optischen Körper (6, 8) aus dem optischen Strahlengang der Eearbeitungsstrahlenbündel (3a, 3b, 3n) entfernbar ist.

4. Werkstückbestrahlungsanlage nach einem der Ansprüche 1 - 3, **dadurch gekennzeichnet, daß** ein einziges die individuellen Bearbeitungsstrahlenbündel (3a, 3b, 3n) einhüllendes Meßstrahlenbündel (21) auf die Ablenkvorrichtungen einfällt.

5. Werkstückbestrahlungsanlage nach Anspruch 1, **dadurch gekennzeichnet, daß** das/die Meßstrahlenbündel (21) unter einem anderen Winkel als die Bearbeitungsstrahlenbündel (3a, 3b, 3n) auf die Ablenkvorrichtungen (7a, 7b, 7c) auffallend sind, so daß die Strahlenquelle (19) zur Erzeugung des/der Meßstrahlenbündel(s) (21) und die Meßaufnahmeeinrichtung (15, 17, 18) seitlich des optischen Strahlengangs der Bearbeitungsstrahlenbündel (3a, 3b, 3c) angeordnet sind.

6. Werkstückbestrahlungsanlage nach einem der Ansprüche 1-5, **dadurch gekennzeichnet, daß** zumindest an die Aufnahmeeinrichtung (15, 17, 18) eine Auswerteeinrichtung angeschlossen ist, welche einen gespeicherten bzw. vorgegebenen SOLL-Zustand mit dem von der Auswerteeinrichtung gemessenen IST-Zustand vergleicht.

7. Werkstückbestrahlungsanlage nach einem der Ansprüche 1-6, **dadurch gekennzeichnet, daß** jede Ablenkvorrichtung (7a, 7b, 7c) aus einem Kippspiegel besteht.

## Claims

1. Workpiece irradiation system which has a plurality of individually adjustable deflecting devices (7a, 7b, 7c), and in the case of which a plurality of spatially mutually separated individual processing beams (3a, 3b, 3n) in the infrared or ultraviolet wavelength region are directed separately in each case on at least one workpiece (12) to be irradiated onto variable points (13a, 13b, 13c) or areas on the workpiece (12) by the deflecting devices (7a, 7b, 7c) arranged in the optical beam path of the processing beams, and an additional radiation source (19) for generating at least one measurement beam (21) is arranged in the workpiece irradiation system such that the measurement beam emanating from the additional radiation source (19) simultaneously impinges on a plurality of deflecting devices (7a, 7b, 7c), and a measuring sensor (15, 17, 18) is arranged in the workpiece irradiation system such that it occupies at least a portion of the measurement bundles (21) which are deflected by the irradiated deflecting devices (7a, 7b, 7c), in order to detect the deflecting action of the deflecting devices (7a, 7b, 7c), **characterized in that** the wavelength of the at least one measurement beam is situated in the visible wavelength region, and the measuring sensor (15, 17, 18) is sensitive to light in the visible wavelength region.

2. Workpiece irradiation system according to Claim 1, **characterized in that** fitted upstream of the deflecting devices (7a, 7b, 7c) in the optical beam path of the processing beam is a first optical member (6) which allows the processing beams (3a, 3b, 3n) to impinge on the deflecting devices (7a, 7b, 7c) and couples the measurement beam(s) (21) into the optical beam path of the processing beams in the direction of the deflecting devices (7a, 7b, 7c), and **in that** fitted downstream of the deflecting devices (7a, 7b, 7c) is a second optical member (8), which allows the processing beams to impinge on points or areas on the workpiece (12), and couples at least the measurement beam(s) (21) out of the optical beam path of the processing beam in a direction of the measuring sensor (15, 17, 18).

3. Workpiece irradiation system according to Claim 2, **characterized in that** at least one of the two optical members (6, 8) can be removed from the optical beam path of the processing beam (3a, 3b, 3n).

4. Workpiece irradiation system according to one of Claims 1-3, **characterized in that** a single measurement beam (21) enveloping the individual processing beams (3a, 3b, 3n) impinges on the deflecting devices.

5. Workpiece irradiation system according to Claim 1, **characterized in that** the measurement beam(s) (21) impinges/impinge on the deflecting devices (7a, 7b, 7c) at a different angle than the processing beam (3a, 3b, 3n), such that the radiation source (19) for generating the measurement beam(s) (21), and the measuring sensor (15, 17, 18) are arranged at the side of the optical beam path of the processing beam (3a, 3b, 3c).

6. Workpiece irradiation system according to one of Claims 1-5, **characterized in that** connected at least to the sensor (15, 17, 18) is an evaluation device which compares a stored or prescribed DESIRED state with the ACTUAL state measured by the evaluation device.

7. Workpiece irradiation system according to one of Claims 1-6, **characterized in that** each deflecting device (7a, 7b, 7c) consists of a tilting mirror.

## Revendications

1. Dispositif d'irradiation de pièces qui possède plusieurs dispositifs de déviation (7a, 7b, 7c) réglables individuellement et avec lequel plusieurs faisceaux de rayons de traitement (3a, 3b, 3n) individuels séparés les uns des autres dans l'espace, dans la gamme de longueurs d'onde infrarouge ou ultraviolette sont déviés par les dispositifs de déviation (7a, 7b, 7c) disposés dans le trajet de faisceau optique des faisceaux de rayons de traitement à chaque fois séparément sur au moins une pièce (12) à irradier sur des points (13a, 13b, 13c) ou des surfaces variables sur la pièce (12) et une source de rayonnement supplémentaire (19) destinée à générer au moins un faisceau de rayons de mesure (21) est disposée dans le dispositif d'irradiation de pièces de telle manière que le faisceau de rayons de mesure qui sort de la source de rayonnement supplémentaire (19) parvient simultanément sur plusieurs dispositifs de déviation (7a, 7b, 7c) et un dispositif d'enregistrement de mesure (15, 17, 18) est disposé dans le dispositif d'irradiation de pièces de telle manière qu'il enregistre au moins une partie des faisceaux de rayons de mesure (21) dévié par les dispositifs de déviation (7a, 7b, 7c) afin de détecter l'effet de déviation des dispositifs de déviation (7a, 7b, 7c), **caractérisé en ce que** la longueur d'onde de l'au moins un faisceau de rayons de mesure se trouve dans la gamme de longueurs d'onde visible et le dispositif d'enregistrement de mesure (15, 17, 18) est sensible à la lumière dans la gamme de longueurs d'onde visible.

2. Dispositif d'irradiation de pièces selon la revendication 1, **caractérisé en ce qu'**un premier corps optique (6) est disposé dans le trajet de faisceau optique des faisceaux de rayons de traitement avant les dispositifs de déviation (7a, 7b, 7c), lequel laisse les faisceaux de rayons de traitement (3a, 3b, 3n) venir frapper les dispositifs de déviation (7a, 7b, 7c) et injecte le/les faisceaux de rayons de mesure (21) dans le trajet de faisceau optique des faisceaux de rayons de traitement en direction des dispositifs de déviation (7a, 7b, 7c), et qu'après les dispositifs de déviation (7a, 7b, 7c) est disposé un deuxième corps optique (8) qui laisse les faisceaux de rayons de traitement venir frapper des points ou des surfaces de la pièce (12) et extrait au moins le/les faisceaux de rayons de mesure (21) du trajet de faisceau optique des faisceaux de rayons de traitement en direction du dispositif d'enregistrement de mesure (15, 17, 18).

3. Dispositif d'irradiation de pièces selon la revendication 2, **caractérisé en ce qu'**au moins l'un des deux corps optiques (6, 8) peut être retiré du trajet de faisceau optique des faisceaux de rayons de traitement (3a, 3b, 3n).

4. Dispositif d'irradiation de pièces selon l'une des revendications 1 à 3, **caractérisé en ce qu'**un seul faisceau de rayons de mesure (21), lequel englobe les faisceaux de rayons de traitement individuels (3a, 3b, 3n), vient frapper sur les dispositifs de déviation.

5. Dispositif d'irradiation de pièces selon la revendication 1, **caractérisé en ce que** le/les faisceaux de rayons de mesure (21) viennent frapper les dispositifs de déviation (7a, 7b, 7c) sous un angle différent de celui des faisceaux de rayons de traitement (3a, 3b, 3n) de manière à ce que la source de rayonnement (19) destinée à générer le/les faisceaux de rayons de mesure (21) et le dispositif d'enregistrement de mesure (15, 17, 18) soient disposés à côté du trajet de faisceau optique des faisceaux de rayons de traitement (3a, 3b, 3c).

6. Dispositif d'irradiation de pièces selon l'une des revendications 1 à 5, **caractérisé en ce qu'**un dispositif d'analyse est au moins raccordé au dispositif d'enregistrement (15, 17, 18), lequel compare un état DE CONSIGNE mémorisé ou prédéfini avec l'état RÉEL mesuré par le dispositif d'analyse.

7. Dispositif d'irradiation de pièces selon l'une des revendications 1 à 6, **caractérisé en ce que** chaque dispositif de déviation (7a, 7b, 7c) se compose d'un miroir basculant.
